# EUROPEAN PATENT APPLICATION

(11) **EP 3 438 343 A2**
(43) Date of publication of application: **06.02.2019**
(21) Application number: 17775974.3
(22) Date of filing: 29.03.2017
(51) Int. Cl.: E01B 23/02, G21F 9/34

(54) **TRACK FOR AN INCLINED ELEVATOR OF A NUCLEAR REACTOR**

(30) Priority: 01.04.2016 RU 2016112292
(71) Applicant: Joint Stock Company "Rosenergoatom", Moscow 109507 (RU); Joint Stock Company "Afrikantov OKB Mechanical Engineering", G. Nizhniy Novgorod 603074 (RU); Joint Stock Company "Science and Innovations", Moscow 119180 (RU)
(72) Inventor: VORONIN, Yuriy Vladimirovich, Nizhniy Novgorod 603074 (RU); RUSAKOV, Sergey Sergeevich, Nizhegorodskaya obl. 606440 (RU); LYUBIMOV, Mikhail Anatol'evich, Nizhniy Novgorod 603043 (RU); TIMOFEEV, Aleksandr Vladimirovich, Nizhniy Novgorod 603159 (RU)
(74) Representative: Friese Goeden Patentanwälte PartGmbB
(86) International application number: PCT/RU2017/000180
(87) International publication number: WO 2017/171588

(57) **Abstract**

The invention relates to the field of nuclear engineering and can be used as part of handling equipment of nuclear reactor.

The engineering challenge is to create a track for the inclined hoist, which allows reducing the time when the trolley with SFA is in the gas atmosphere due to the reduction in the track length.

Solving the assigned task allows increasing the safety of transportation of SFAs along the inclined hoist of the nuclear reactor.

The essence of the invention lies in the fact that the rail track of the inclined hoist of nuclear reactor is made with an alternation of rectilinear and curvilinear sections, the initial and final sections being rectilinear and arranged at the same inclination angle **α** to the horizon plane.

## Description

The invention relates to the field of nuclear engineering and can be used as part of handling equipment of nuclear reactor.

A fast neutron nuclear reactor with a sodium coolant is known, that uses an inclined hoist (conveyor) to handle spent fuel assemblies (SFA), wherein the upper part of the hoist is located in the gas atmosphere of an egression pit, and the lower part - in the water of a suppression pool (Moscow, Mashinostroyeniye, 2005, "Machine building in nuclear industry", Book 1, Volume IV-25, p.345).

Arrangement of the inclined hoist and the suppression pool with cooling water in the same building as the reactor reduces the reactor unit reliability and safety, since in case if the suppression pool wall loses tightness in an emergency situation (for example, during an earthquake), water can enter a room with radioactive sodium equipment of the first circuit, which can lead, with the active interaction of sodium with water, to a fire with severe radiation consequences.

A small angle of inclination of the track as per the horizon plane leads to a large length of the track section which a trolley of the inclined hoist with SFA travels over in the gas atmosphere. In an emergency situation related to the loss of power supply, SFA gets stuck in the gas atmosphere, which leads to its overheating due to own residual heat release, to the loss of tightness of the fuel elements' shells and the release of radioactive fission products into rooms of the reactor unit.

An inclined hoist of nuclear reactor is known, containing a drive, a drum with a cable, a trolley with a sleeve for installation of SFA, and a rectilinear track with an upper and lower stops (utility model patent No. 77489), which is taken as a prototype for most essential characteristics.

In the event of a power failure, the trolley with SFA of this inclined hoist can be moved to the suppression pool water using a manual drive, which is specified in safety regulatory documents. However, due to the fact that the speed of moving the trolley with SFA using manual drive is much lower than the speed of moving the trolley using electric drive, there is a restriction on the length of the track section that the trolley with SFA can pass in the gas atmosphere without exceeding the permissible temperature of the fuel elements' shells. This problem is especially acute for large power reactors with a long rail track (for instance, the suppression pool is located in a detached building) and heavy SFAs (the heavier the SFAs and the trolley, the lower the speed of moving the trolley with SFA using manual drive).

The engineering challenge is to create a track for the inclined hoist, which allows reducing the time when the trolley with SFA is in the gas atmosphere due to the reduction in the track length.

Solving the assigned task allows increasing the safety of transportation of SFAs along the inclined hoist of the nuclear reactor.

The task is solved by the fact that the rail track for the inclined hoist of the nuclear reactor providing the movement of the trolley with the sleeve for installation of the spent fuel assemblies along an inclined corridor between the egression pit and the suppression pool is made with an alternation of rectilinear and curvilinear sections, wherein the initial rectilinear section and the final rectilinear section have the same inclination angle **α**,
satisfying the condition **tg α** > **k**, where **k** - friction coefficient of the trolley and the track.

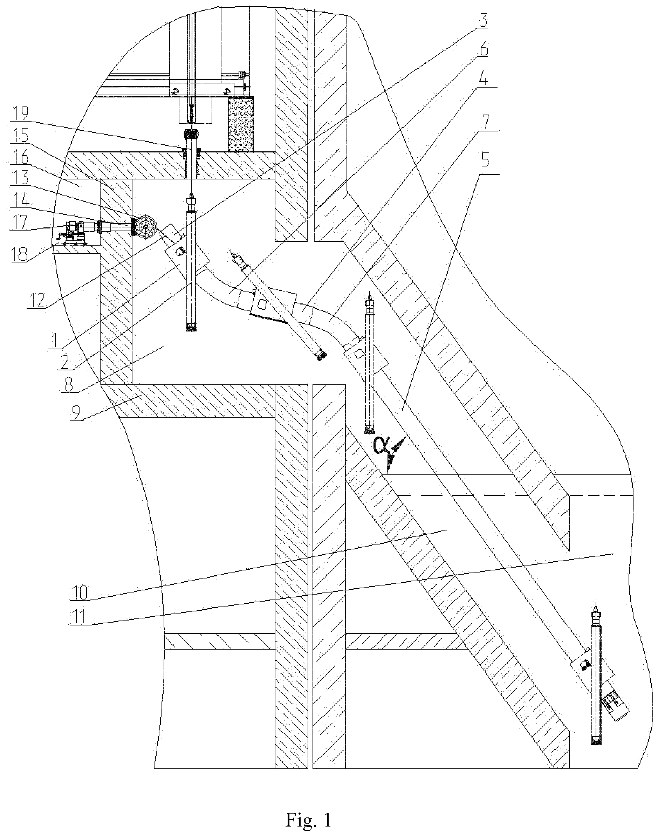

The essence of the technical solution is explained by the drawing, which shows the inclined hoist in longitudinal section.

The inclined hoist includes a trolley 1 with a rigidly fixed sleeve 2 for SFA, moving along a rail track consisting of rectilinear sections 3, 4, 5 and curvilinear sections 6 and 7. The upper
part of the rail track is located in an egression pit 8 of a reactor building 9, and the lower part extends along an inclined corridor 10 connecting the egression pit 8 to a suppression pool 11. The trolley 1 is connected to a drum 13 by means of a cable 12.

The drum is mounted on a penetration 14 located in a protective wall 15 between the egression pit 8 and an operator room 16, where an electric drive 17 connected to the penetration 14 is installed, provided with a manual drive 18. There is a channel 19 in the ceiling of the egression pit 8, through which the SFA is installed in the trolley sleeve 2.

The inclined hoist is operated as follows.

In the process of handling through the channel 19, SFA is loaded into the sleeve 2 of the trolley 1. The trolley 1 with the SFA installed in the sleeve 2 is moved by the electric drive from the upper position in the egression pit 8 to the lower position in the suppression pool 11 where the SFA is handled to storage compartments. The empty trolley is lifted to the egression pit 8 and the handling cycle is repeated until the SFA is completely unloaded from the reactor.

To ensure vertical position of the sleeve 2 axis at points of SFA loading and unloading, the initial section 3 and the final section 5 of the rail track are rectilinear and located at the same angle α to the horizon plane.

The presence of a rectilinear section 4 of the rail track located between the curvilinear sections 6 and 7 in the egression pit 8 provides a large inclination of the sleeve 2 to the horizon plane, which allows reducing the dimensions of openings in the building walls of the reactor compartment and the suppression pool, which the trolley 1 travels over.

The inclination angle **α** of the rectilinear section 4 of the rail track allows free movement of the trolley 1 in emergency situations when, for example, wheel bearings 1 of the trolley 1 are jammed and the trolley 1 moves from the upper to the lower position by gravity under conditions of the sliding movement of contacting surfaces of the trolley wheels and the track. The inclination angle **α** should satisfy the condition: **tg α** > **k**, where **α** is the inclination angle of the rectilinear section of the track to the horizon plane; **k** is the friction coefficient of the contacting surfaces of the trolley and the track.

The presence of curvilinear sections 6 and 7 allows making the end rectilinear section 5 with a large inclination angle to the horizon plane, which reduces the overall length of the track that the trolley 1 with SFA travels over in the gas atmosphere.

Application of the proposed technical solution in the inclined hoists of the nuclear reactor allows increasing the reactor operation safety due to the fact that in an emergency situation with power supply loss and SFA getting stuck in the egression pit, the trolley is transported to the suppression pool by manual drive in a fairly short time during which the temperature of SFA shells being heated by internal heat release does not reach the safe operation limitations.

## Claims

1. A rail track for the inclined hoist of the nuclear reactor providing the movement of the trolley with the sleeve for installation of the spent fuel assemblies along the inclined corridor between the egression pit and the suppression pool, which is made with an alternation of the rectilinear and curvilinear sections, wherein the initial rectilinear section and the final rectilinear section have the same inclination angle **α**.

2. According to claim 1, the rail way is **characterized in that** the inclination angle **α** of any rectilinear sections is chosen according to the condition **tg α > k**,
where **α** is the inclination angle of the rectilinear sections;
**k** is the friction coefficient of the trolley and the track.
